(19) Europäisches Patentamt
European Patent Office
Office européen des brevets

(11) **EP 0 484 895 B1**

(12) **EUROPÄISCHE PATENTSCHRIFT**

(45) Veröffentlichungstag und Bekanntmachung des Hinweises auf die Patenterteilung:
**31.01.1996  Patentblatt 1996/05**

(51) Int Cl.6: **G01S 13/93**, G01S 15/74, G01S 15/93, G08G 1/123, G01S 11/16

(21) Anmeldenummer: **91118893.6**

(22) Anmeldetag: **06.11.1991**

(54) **Verfahren zur Bestimmung der relativen Position von Fahrzeugen im Strassenverkehr**

Procedure for determining the position of vehicles in traffic

Procédé de détermination de la position relative de véhicules circulants

(84) Benannte Vertragsstaaten:
**DE FR GB NL**

(30) Priorität: **08.11.1990 DE 4035501**

(43) Veröffentlichungstag der Anmeldung:
**13.05.1992  Patentblatt 1992/20**

(73) Patentinhaber: **ROBERT BOSCH GMBH**
**D-70442 Stuttgart (DE)**

(72) Erfinder: **Ohler, Michael**
**W-3211 Despetal 2 (DE)**

(56) Entgegenhaltungen:
DE-A- 3 910 537  FR-A- 2 274 932
FR-A- 2 631 454  US-A- 4 580 250

- INTERNATIONALES VERKEHRSWESEN. Bd. 41, Nr. 2, März 1989, DARMSTADT DE Seiten 120-123; S.LENART: 'ARTHUR Automatisches Not-und Warnfunksystem für Notsituationen im Autoverkehr'
- FIRST VEHICLE NAVIGATION AND INFORMATION SYSTEMS CONFERENCE 11. September 1989, TORONTO, CANADA Seiten 403 - 408; J.C. BELL: 'Vehicular C3N - A Global Satellite Solution'
- 1986 IEEE MILITARY COMMUNICATIONS CONFERENCE Bd. 2, 5. Oktober 1986, MONTEREY, CALIFORNIA Seiten 2941 - 2943; T. LOGSDON: 'The Time Synchronization Capabilities of the NAVSTAR Global Positioning System'
- ELEKTOR ELECTRONICS. Bd. 14, Nr. 152, Januar 1988, CANTERBURY GB Seiten 24 - 29; 'DCF77 Receiver and Locked Frequency Standard'
- M. I. SKOLNIK 'INTRODUCTION TO RADAR SYSTEMS' 1981 , MCGRAW-HILL , USA

**Beschreibung**

Die Erfindung betrifft ein Verfahren zur Bestimmung der relativen Position von Fahrzeugen im Straßenverkehr nach dem Oberbegriff des Anspruchs 1.

Im Straßenverkehr kommt es häufig zu gefährlichen Situationen, die auch Unfälle nach sich ziehen können, wenn Fahrzeugführer die Position, Fahrtrichtung, Geschwindigkeit, das Fahrverhalten oder die Fahrabsicht anderer Verkehrsteilnehmer nicht richtig wahrnehmen und dementsprechend ihr eigenes Fahrverhalten nicht situationsgerecht anpassen.

Solche Situationen können vermieden oder wenigstens stark reduziert werden, wenn mehr Informationen über die eigene relative Position gegenüber anderen Fahrzeugen verfügbar sind.

Zur Abstandsbestimmung eines vorausfahrenden Fahrzeugs sind bereits passive oder aktive Meßverfahren bekannt, die auf der Aussendung und Laufzeitmessung von Ultraschall-Signalen beruhen. Bei einem aktiven Meßverfahren mit einem IR/US-Transponder wird von einem ersten Fahrzeug aus ein Infrarot-Signal als Startsignal ausgesendet, das bei einem zweiten Fahrzeug die Aussendung eines Ultraschall-Signals veranlaßt. Aus der verstrichenen Zeit zwischen der Aussendung des Infrarot-Signals und dem Empfang des Ultraschall-Signals kann dann der Abstand des ersten Fahrzeugs vom zweiten ermittelt werden. Dabei wird natürlich die Laufzeit des Infrarot-Signals gleich Null gesetzt.

Da es sich bei Infrarot-Strahlung um eine gerichtete Strahlung handelt, funktioniert das Verfahren nur bei ganz bestimmten Ausrichtungen der Fahrzeuge zueinander oder es werden eine Vielzahl von Infrarot-Sendern und -Empfängern benötigt, was den Aufwand beträchtlich erhöhen würde. Wird jedoch mit einer Vielzahl von Infrarot-Sendern und -Empfängern gearbeitet, so fehlt es bei mehreren Fahrzeugen an einer Koordination, so daß keine eindeutigen Ergebnisse mehr erzielt werden können.

Aus der DE-A-3 910 537 ist ein Verfahren zur Kollisionsvermeidung in Anlagen mit fahrerlos geführten Fahrzeugen bekannt. Bei diesen Fahrzeugen ist an jeder Seite ein Infrarot-Sender und -Empfänger und ein Ultraschallwandler angeordnet. Die Infrarot-Empfänger detektieren beispielsweise die von den Wänden reflektierte Strahlung, die als Startsignal für die Laufzeitmessung von ausgesandten Ultraschallsignalen ausgewertet wird. Diese Fahrzeuge sind jedoch fahrerlos und nicht für den Straßenverkehr geeignet. Da sie an jeder Seite nur einen Sender bzw. Empfänger haben, ist die Bestimmung der Richtung zu einem erfaßten Gegenstand nur sehr eingeschränkt möglich.

Aus der FR-A-2 274 932 ist ein Sekundärradarsystem zur Verkehrsüberwachung bekannt, bei dem ein Abfragegerät in zyklischer Folge einzelne Fahrzeuge, die mit einem Transponder ausgerüstet sind, für einen Datenaustausch erfaßt. Dabei werden abstandscodierte Impulskombinationen abgestrahlt und von den erfaßten Fahrzeugen mit der jeweiligen Identität des Fahrzeuges zurückgesendet.

Des weiteren ist aus der Veröffentlichung 'ARTHUR Automatisches Not- und Warnfunksystem für Notsituationen im Autoverkehr', Internationales Verkehrswesen, Band 41, Nr. 2, März 1989, Darmstadt, DE, Seiten 120 bis 123 bekannt, im Notfall automatisch eine Notrufmeldung mit Standortangabe an eine Rettungsleitstelle zu senden. Dabei können sowohl vorhandene Kommunikationsinfrastrukturen des öffentlichen mobilen Landfunks wie des cellularen Autotelefon-Netzes als auch Satelliten-Netzwerke verwendet werden. Die Standortangabe wird z.B. im C-Autotelefonnetz mit Laufzeitmessungen im Organisationskanal ohne Inanspruchnahme einer zusätzlichen Infrastruktur ermittelt.

Der Erfindung liegt die Aufgabe zugrunde, ein Verfahren zur Bestimmung der relativen Position von Fahrzeugen im Straßenverkehr zu schaffen, das eindeutige, nicht auf eine Vorzugsrichtung beschränkte Meßwerte auch bei mehreren im Umfeld der Messung befindlichen Fahrzeugen liefert.

Diese Aufgabe wird bei einem Verfahren nach dem Oberbegriff des Anspruchs 1 durch die im Kennzeichen angegebenen Merkmale gelöst.

Ein Grundgedanke der Erfindung beruht darauf, zwischen den einzelnen Fahrzeugen, deren relative Position bestimmt werden soll, eine Kommunikation herzustellen. Die Kommunikation erfolgt zyklisch, damit die sich ständig ändernde Verkehrssituation immer aktualisiert werden kann. So lassen sich Fahrzeuge, die sich einer bestimmten räumlichen Zelle nähern, mit in den Austausch der Datentelegramme einbeziehen und andere Fahrzeuge, die sich entfernen, wieder herausnehmen. Durch die Kommunikation gelingt es, die Meßphasen, also die Zeiten oder Zeitschlitze, in denen Ultraschall-Signale ausgestrahlt werden, zu koordinieren.

Auch die Übertragung der Datentelegramme selbst erfolgt zweckmäßig in Zeitschlitzen, damit Störungen durch gleichzeitige Aussendungen vermieden werden. Um auszuschließen, daß mehrere sich einander nähernde Fahrzeuge im gleichen Zeitschlitz Datentelegramme senden, erfolgt die Zuweisung der Zeitschlitze innerhalb eines vorgegebenen Datenrahmens nach einem Zuweisungs-Algorithmus unter Ausschluß bereits belegter und reservierter Zeitschlitze. Ein geeigneter Algorithmus ist z. B. der S-ALOHA-Algorithmus mit dezentraler Reservierung. In der Praxis läßt sich dies erreichen, indem vor Zuweisung des eigenen Zeitschlitzes der Datenübertragungs-Verkehr beobachtet und bereits belegte Zeitschlitze für die eigene Zuweisung gesperrt werden. Zusätzlich wird über korrekt empfangene Telegramme und zugehörige Zeitschlitze im eigenen Telegramm berichtet, so daß Kollisionen erkannt und aufgelöst werden können.

Um das gesamte Umfeld mit dem Datentelegramm bei geringem Aufwand an Sendern und Empfängern erreichen zu können, wird ein Übertragungsverfahren gewählt, das mit einfachen Mitteln eine Rundstrahlcharakteristik ermöglicht. Dies ist für HF-Funksignale wie auch für die Ultraschall-Signale erreichbar.

Zur Erleichterung des Datenaustausches ist es zweckmäßig, den Datenrahmen, in den die Zeitschlitze eingebunden sind, einer für alle Fahrzeuge gemeinsamen Synchronisation zu unterziehen. Dies kann z. B. durch einen überregionalen Zeitmarkensender, wie den DCF 77 erfolgen. Dazu ist zusätzlich zur Demodulation auch eine Trägerrückgewinnung zu realisieren und ein Algorithmus anzuwenden, der im lokalen Bereich die Nutzung des gleichen Trägernulldurchgangs als Referenz bewirkt.

Um für die Ultraschall-Signale eine ausgeglichene Rundstrahlcharakteristik zu erzielen und auch Richtungen der Fahrzeuge erfassen zu können, besitzen alle mit dem System ausgestatteten Fahrzeuge jeweils einen Ultraschall-Sender und jeweils einen Ultraschall-Empfänger-Paar aus zwei Einzelempfängern auf jeder Längsseite und jeder Querseite. Dadurch können alle im Umfeld des sendenden Fahrzeugs befindlichen Fahrzeuge das Ultraschall-Signal empfangen und auswerten.

Weiterbildungen und vorteilhafte Ausgestaltungen der Erfindung ergeben sich aus den Ansprüchen, der weiteren Beschreibung und der Zeichnung, anhand der die Erfindung näher erläutert wird.

In der Zeichnung zeigen:

Fig. 1    ein Zeitdiagramm eines Überrahmens mit Rahmen für die Übertragung von Datentelegrammen und Ultraschall-Signalen,

Fig. 2    eine Skizze einer Verkehrssituation mit mehreren Fahrzeugen zur Veranschaulichung der Positionsbestimmung.

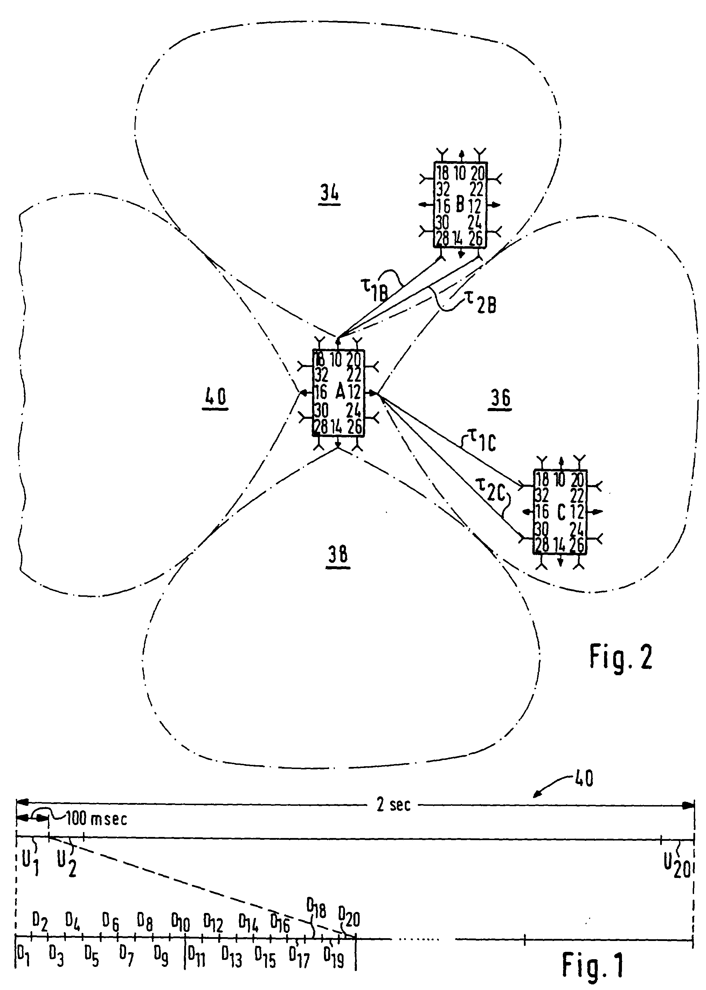

In Fig. 1 ist ein Zeitdiagramm dargestellt, das sowohl den Rahmen für Datentelegramme als auch den Rahmen für Ultraschall-Signale umfaßt.

Ein Überrahmen 40 besitzt eine Zeitdauer von 2 sec. Innerhalb dieses Überrahmens 40 befindet sich der Rahmen für Ultraschall-Signale mit Zeitschlitzen $U_1$ ... $U_{20}$ von jeweils 100 msec. Aus der durch die Länge der Zeitschlitze vorgegebenen maximalen Laufzeit ergibt sich ein Meßradius von ca 30 m. Außerdem umfaßt der Überrahmen 40 die Rahmen für Datentelegramme mit Zeitschlitzen $D_1$ ... $D_{20}$, die beispielsweise gemäß Figur 1 dem Zeitschlitz $U_1$ zugeordnet sind.

Die Zeitschlitze D können wesentlich kürzer als die Zeitschlitze U bemessen sein, wenn die Art der Datenübertragung eine hohe Datenrate zuläßt. Dies ist bei HF-Funksignalen der Fall. Dadurch lassen sich mehr Zeitschlitze innerhalb des Rahmens für Datentelegramme unterbringen, wodurch bei einer großen Anzahl von Fahrzeugen die Auffindung freier Zeitschlitze verbessert wird.

Durch eine globale Synchronisation läßt sich erreichen, daß die Rahmen bei allen Einrichtungen zur Bestimmung der relativen Position eines Fahrzeugs im gleichen Zeitraster liegen. Eine solche Synchronisation wird zweckmäßig durch einen überregional empfangbaren Zeitmarken-Sender, z.B. den DCF 77, mit einem gegenüber der bisherigen Signalauswertung verfeinerten Verfahren, durchgeführt.

Die Einrichtung zur Bestimmung der relativen Position eines Fahrzeugs, das sich gerade in den Straßenverkehr begibt, beobachtet zunächst den Funkverkehr fremder Fahrzeuge, um die Belegung der Zeitschlitze für die Übertragung von Datentelegrammen bei Nutzung von DCF 77 o.ä. den gültigen Trägernulldurchgang zu erfassen. Danach weist sich die Einrichtung selbst einen freien Zeitschlitz, z.B. $D_6$ durch den S-ALOHA-Algorithmus zu und teilt dies den anderen Fahrzeugen durch Aussendung eines Datentelegramms in diesem Zeitschlitz mit.

Das Datentelegramm enthält eine Identifikationskennung und den Zeitpunkt bzw. Zeitschlitz für die Aussendung von Ultraschall-Signalen für die Bestimmung der Position im Überrahmen. Die ergänzende Übermittlung weiterer Daten ist möglich. Hierfür kommen Geschwindigkeit, Beschleunigung, Fahrabsichten, und beim LKW Fahrzeugart und Gewicht der Ladung in Frage.

Die Übermittlung von Datentelegrammen erfolgt zyklisch, wodurch jedes Fahrzeug in die Lage versetzt wird, wechselweise seine eigenen Daten in kurzen Zeitabständen zu übertragen und die Daten aller übrigen Fahrzeuge zu empfangen und zu aktualisieren. Die Informationen über Geschwindigkeit und Beschleunigung eines anderen Fahrzeuges ermöglichen die exakte Verfolgung von dessen Position zwischen den Meßzeitpunkten.

Ebenfalls zyklisch, jedoch mit einer längeren Zykluszeit erfolgt die Aussendung von Ultraschall-Signalen. Dies wird anhand einer in Fig. 2 dargestellten Verkehrssituation erläutert.

In Fig. 2 ist eine Verkehrssituation mit drei Fahrzeugen A, B und C dargestellt. Alle drei Fahrzeuge besitzen eine Einrichtung zur Bestimmung ihrer relativen Position im Straßenverkehr. Dazu gehören jeweils ein Sender und ein Empfänger zum Übertragen von Datentelegrammen, Auswerteschaltungen sowie Sender und Empfänger für Ultraschall-Signale. Von diesen Einrichtungen sind nur die Sender und Empfänger für Ultraschall-Signale durch Symbole angedeutet.

Bei jedem Fahrzeug befinden sich an den Querseiten zur Fahrzeugachse, also der Vorderseite und der Rückseite die Ultraschall-Sender 10 bzw. 14 und die Ultraschall-Empfänger 18, 20 bzw. 26, 28. An den Längsseiten sind die Ultraschall-Sender 12 bzw. 16 sowie die Ultraschall-Empfänger 22, 24 bzw 30, 32 angeordnet. Die Aussendungen der Ultraschall-Sender sind weitgehend ungerichtet. Dadurch lassen sich Öffnungswinkel der Strahlungskeulen von etwa jeweils 90 Grad erzielen, wodurch sich bei Ausnutzung aller Ultraschall-Sender 10, 12, 14 und 16 ein kleeblattförmiges Gesamtbedeckungsgebiet aus den einzelnen Bedeckungsgebieten 34, 36, 38 und 40 ergibt.

Die Reichweite, innerhalb der zuverlässige Messungen möglich sind, beträgt etwa 30 m. Somit können alle im Umkreis von 30 m vom sendenden Fahrzeug befindlichen Fahrzeuge ihre Position zum sendenden Fahrzeug bestimmen, es sei denn, eine "Sichtverbindung" ist durch andere Fahrzeuge oder Gegenstände unterbrochen. Eine größere Reichweite wäre zwar technisch möglich, ist aber aufgrund von Fehlermöglichkeiten durch Reflexionen nicht sinnvoll.

In Fig. 2 ist gerade die Situation dargestellt, in der das Fahrzeug A innerhalb des ihm zugewiesenen Ultraschall-Zeitschlitzes Ultraschall-Signale aussendet, während die Fahrzeuge B und C in Empfangsbereitschaft sind. Alle im Umkreis befindlichen Fahrzeuge haben den zuvor ausgetauschten Datentelegrammen bereits die Identifikationsangaben des Fahrzeugs A sowie den Zeitpunkt und Zeitschlitz der Aussendung entnommen. Dadurch ist sichergestellt, daß empfangene Ultraschall-Signale nur vom Fahrzeug A stammen können.

Das Fahrzeug B empfängt mit seinen Ultraschall-Empfängern 26 und 28 nun Ultraschall-Signale. Auch das Fahrzeug C empfängt Ultraschall-Signale, und zwar mit den Empfängern 30 und 32. Aus den Laufzeiten der Ultraschall-Signale, die sich aus dem im Datentelegramm festgelegten Zeitpunkt der Aussendung und den Zeitpunkten ihres tatsächlichen Empfangs ergeben, können mit Hilfe der Auswerteschaltungen die eigene relative Position der Fahrzeuge zum Fahrzeug A bestimmt werden.

Die Position ergibt sich z. B. bei Nutzung der linksseitigen US-Empfänger des Fahrzeugs C aus der Entfernung in Verbindung mit der Richtung gemäß folgender mathematischer Beziehung:

$$l = 2 * v_s * (\tau_{1c} - \tau_{2c})$$

$$\alpha = \text{arc cos}\,((v_s / x) * (\tau_{2c} - \tau_{1c}))$$

$v_s$ = Schallgeschwindigkeit
$l$ = Entfernung
$\alpha$ = Richtungswinkel
$x$ = Abstand der US-Empfänger
$\tau_{1c}$, $\tau_{2c}$ = Signallaufzeit eines US-Senders

Bei Nutzung anderer Empfängerpaare sind entsprechende Berechnungen möglich, sogar oft mehrfach. Plausibilitätsprüfungen sind daher möglich.

Nach der Aussendung durch Fahrzeug A folgt im nächsten Ultraschall-Zeitschlitz ein anderes Fahrzeug mit der Aussendung, z.B. B und danach ein weiteres, z.B. C bis alle innerhalb derselben räumlichen Zelle befindlichen Fahrzeuge einmal an der Reihe waren und der Zyklus wieder von vorn mit Fahrzeug A beginnt.

Die ermittelten Entfernungs- und Richtungswerte der anderen Fahrzeuge können nun dem Fahrer als Information angezeigt werden. In Verbindung mit anderen Daten lassen sich auch Warn-, oder Steuerungssignale erzeugen. So ist z.B. denkbar, daß vor einer Abbiegeabsicht oder einem Fahrspurwechsel gewarnt wird, oder dies sogar verhindert wird, wenn aufgrund der vorliegenden Daten die Gefahr einer Kollision mit einem anderen Fahrzeug bestünde.

**Patentansprüche**

1. Verfahren zur Bestimmung der relativen Position von Fahrzeugen (A, B, C) in einer Kommunikationszone, wobei an den Seiten der Fahrzeuge (A, B, C) Sende- und Empfangsantennen (10, 12, 14, 16, 18, 20, 22, 24, 26, 28, 30, 32) angeordnet sind, mit denen ein Fahrzeug (A) innerhalb eines Zeitschlitzes eines gemeinsamen Datenrahmens ein Datentelegramm mit dem Zeitpunkt für die Aussendung eines Ultraschallsignals an ein weiteres Fahrzeug (B, C) in der Kommunikationszone sendet und das weitere Fahrzeug (B, C) in Verbindung mit dem Empfang des Ultraschallsignals an seiner Empfangsantenne (10, 12, 14, 16, 18, 20, 22, 24, 26, 28, 30, 32) die Laufzeit des Ultraschallsignals bestimmt und daraus den Abstand zu dem Fahrzeug (A) ermittelt, dadurch gekennzeichnet, daß die Positionsbestimmung für Fahrzeuge (A, B, C) im Straßenverkehr durchgeführt wird, daß auf beiden Längs- und beiden Querseiten des Fahrzeugs (B, C) jeweils mindestens zwei Empfangsantennen paarweise räumlich getrennt voneinander angeordnet sind und die eintreffenden Ultraschall-Signale paarweise empfangen werden, daß die Entfernung durch Mittelwertbildung der von den Empfängern eines Empfängerpaares gemessenen Laufzeiten und die Richtung durch die Differenz der von den Empfängern eines Empfängerpaares gemessenen Laufzeiten bestimmt werden.

2. Verfahren nach Anspruch 1, dadurch gekennzeichnet, daß den Fahrzeugen Zeitschlitze für die Übertragung des Datentelegramms nach einem Zuweisungs-Algorithmus unter Ausschluß bereits belegter und reservierter Zeitschlitze zugewiesen werden, vorzugsweise nach dem S-ALOHA-Algorithmus mit Reservierung.

3. Verfahren nach Anspruch 1 oder 2, dadurch gekennzeichnet, daß die Übertragung des Datentelegramms durch HF-Funksignale erfolgt, die in Rundstrahlcharakteristik ausgestrahlt werden.

4. Verfahren nach Anspruch 1 oder 2, dadurch gekennzeichnet, daß die Übertragung von Daten auch durch die Ultraschall-Signale selbst erfolgt, indem diese mit den zu übertragenden Daten moduliert werden.

5. Verfahren nach Anspruch 4, dadurch gekennzeichnet, daß den Fahrzeugen Datentelegramme mit Identifikations angaben für die Datenübertragung zugewiesen werden.

6. Verfahren nach einem oder mehreren der Ansprüche 2 bis 5, dadurch gekennzeichnet, daß die Zeitschlitze in einen Datenrahmen eingebunden sind, der global mittels GPS oder durch ein Verfahren synchronisiert wird, daß von einem überregionalen Zeitmarkensender, z.B. DCF 77, Gebrauch macht, indem auch die Trägerfrequenz regeneriert wird und Nulldurchgänge des Trägers als Zeitfrequenz genutzt werden.

7. Verfahren nach einem oder mehreren der Ansprüche 1 bis 6, dadurch gekennzeichnet, daß im Datentelegramm zusätzliche Daten, wie Geschwindigkeit, Beschleunigung, Fahrabsichten, und beim LKW Fahrzeugart und Gewicht der Ladung übertragen werden.

8. Verfahren nach einem oder mehreren der Ansprüche 1 bis 7, dadurch gekennzeichnet, daß Ultraschall-Signale vom jeweils sendenden Fahrzeug aus gleichzeitig in beide Längs- und beide Querrichtungen bezogen auf die Fahrzeugachse abgestrahlt werden.

9. Verfahren nach einem der Ansprüche 1-8, dadurch gekennzeichnet, daß bei Empfang der Ultraschall-Signale durch die Empfängerpaare mehrerer Fahrzeugseiten nur die stärksten Signale ausgewertet werden.

10. Verfahren nach Anspruch 1, dadurch gekennzeichnet, daß bei Empfang der Ultraschall-Signale durch die Empfängerpaare mehrerer Fahrzeugseiten alle Signale ausgewertet werden und diese zur Fehlererkennung und/oder Korrektur ausgenutzt werden.

11. Verfahren nach einem oder mehreren der Ansprüche 1 bis 10, dadurch gekennzeichnet, daß die gewonnen Entfernungs- und Richtungswerte gegebenenfalls in Verbindung mit anderen Daten zur Erzeugung von Informations-, Warn-, oder Steuerungssignalen verwendet werden.

## Claims

1. Procedure for determining the relative positions of vehicles (A, B, C) in a communication zone, transmitting and receiving aerials (10, 12, 14, 16, 18, 20, 22, 24, 26, 28, 30, 32) being arranged on the sides of the vehicles (A, B, C), with which transmitting and receiving aerials (10, 12, 14, 16, 18, 20, 22, 24, 26, 28, 30, 32) a vehicle (A) transmits, within a time slot of a common data frame, a data telegram with the time for the broadcasting of an ultrasonic signal to a further vehicle (B, C) in the communication zone and the further vehicle (B, C) determines the propagation time of the ultrasonic signal in conjunction with the reception of the ultrasonic signal at its receiving aerial (10, 12, 14, 16, 18, 20, 22, 24, 26, 28, 30, 32) and identifies from it the distance from the vehicle (A), characterized in that the determination of positions for vehicles (A, B, C) is carried out in road traffic, in that on the two longitudinal sides and the two transverse sides of the vehicle (B, C) in each case at least two receiving aerials are arranged in pairs spatially separated from one another and the incoming ultrasonic signals are received in pairs, in that the distance is determined by forming mean values of the propagation times measured by the receivers of a pair of receivers and the direction is determined by means of the difference between the propagation times measured by the receivers of a pair of receivers.

2. Procedure according to Claim 1, characterized in that time slots for the transmission of the data telegram are assigned to the vehicles according to an assignment algorithm excluding time slots which have already been occupied and reserved, preferably according to the S-ALOHA algorithm with reservation.

3. Procedure according to Claim 1 or 2, characterized in that the transmission of the data telegram takes place by means of RF radio signals which are broadcast using an omnidirectional characteristic.

4. Procedure according to Claim 1 or 2, characterized in that the transmission of data also takes place by means of the ultrasonic signals themselves in that the latter are modulated with the data to be transmitted.

5. Procedure according to Claim 4, characterized in that data telegrams with identification information for the transmission of data are assigned to the vehicles.

6. Procedure according to one or more of Claims 2 to 5, characterized in that the time slots are integrated into a data frame which is synchronized globally by means of GPS or by means of a procedure which makes use of a supraregional timing mark transmitter, e.g. DCF 77, in that the carrier frequency is also regenerated and zero crossovers of the carrier are used as timing frequency.

7. Procedure according to one or more of Claims 1 to 6, characterized in that additional data, such as speed, acceleration, travel intensions and, in the case of lorries, the type of vehicle and weight of the load are transmitted in the data telegram.

8. Procedure according to one or more of Claims 1 to 7, characterized in that ultrasonic signals are simultaneously broadcast by the respectively transmitting vehicle in both longitudinal directions and both transverse directions with respect to the axis of the vehicle.

9. Procedure according to one of Claims 1 - 8, characterized in that when the ultrasonic signals are received by the pairs of receivers of a plurality of sides of the vehicle only the strongest signals are evaluated.

10. Procedure according to Claim 1, characterized in that when the ultrasonic signals are received by the pairs of receivers of a plurality of sides of the vehicle all the signals are evaluated and these are utilized for fault detection and/or correction.

11. Procedure according to one or more of Claims 1 to 10, characterized in that the acquired distance values and direction values are used if appropriate in conjunction with other data for generating information signals, warning signals or control signals.

**Revendications**

1. Procédé pour déterminer la position relative de véhicules (A, B, C) dans une zone de communication, procédé dans lequel, sur les côtés des véhicules (A, B, C) sont disposées des antennes d'émission et de réception (10, 12, 14, 16, 18, 20, 22, 23, 24, 26, 28, 30, 32), par lesquelles un véhicule (A), à l'intérieur d'un intervalle de temps d'un cadre de données commun, envoie à un autre véhicule (B, C) dans la zone de communication un télégramme de données avec le moment fixé pour l'émission d'un signal ultra-sonore, et l'autre véhicule (B, C), en liaison avec la réception du signal ultra-sonore par son antenne réceptrice (10, 12, 14, 16, 18, 20, 22, 24, 26, 28, 30, 32) détermine le temps de parcours du signal ultra-sonore et, à partir de là, détermine la distance au véhicule (A),
procédé caractérisé en ce que la détermination de la position pour des véhicules (A, B, C) s'effectue dans le trafic routier, en ce que sur les deux côtés longitudinaux et les deux côtés transversaux du véhicule (B, C) sont respectivement disposées au moins deux antennes réceptrices jumelées, séparée spatialement l'une de l'autre, et qui vont recevoir en jumelage les signaux ultra-sonores arrivant, en ce que l'éloignement sera déterminé par la formation de la valeur moyenne des temps de parcours mesurés par les récepteurs d'une paire de récepteurs, et en ce que la direction sera déterminée par la différence des temps de parcours mesurés par les récepteurs d'une paire de récepteurs.

2. Procédé selon la revendication 1, caractérisé en ce que des intervalles de temps pour la transmission du télégramme de données sont attribués aux véhicules selon un algorithme d'attribution, en excluant les intervalles de temps déjà occupés et réservés, de préférence selon l'algorithme S-ALOHA avec réservation.

3. Procédé selon la revendication 1 ou 2, caractérisé en ce que la transmission du télégramme de données s'effectue par signaux radio HF qui sont émis en une caractéristique omnidirectionnelle.

4. Procédé selon la revendication 1 ou 2, caractérisé en ce que la transmission de données s'effectue également par les signaux ultra-sonores eux-mêmes, et en ce que ceux-ci sont modulés par les données à transmettre.

5. Procédé selon la revendication 4, caractérisé en ce qu'on attribue aux véhicules, pour la transmission de données, des télégrammes de données avec des indications d'identification.

6. Procédé selon l'une ou plusieurs des revendications 2 à 5, caractérisé en ce que les intervalles de temps sont intégrés dans un cadre de données qui est globalement synchronisé au moyen de GPS ou par un procédé qui utilise un émetteur surrégional de repères de temps, par exemple le DCF 77, tandis qu'également la fréquence porteuse est régénérée et que les passages par zéro de la porteuse sont utilisés comme fréquence de temps.

7. Procédé selon l'une ou plusieurs des revendications 1 à 6, caractérisé en ce que dans le télégramme de données sont transmises des données supplémentaires, telles que la vitesse, l'accélération, les intentions de conduite et, dans le cas d'un camion, le type de véhicule et le poids de la charge.

8. Procédé selon l'une ou plusieurs des revendications 1 à 7, caractérisé en ce que des signaux ultra-sonores en provenance du véhicule respectif qui émet, sont rayonnés simultanément dans deux directions longitudinales et deux directions transversales par rapport à l'axe du véhicule.

9. Procédé selon l'une des revendications 1 à 8, caractérisé en ce que, lors de la réception des signaux ultra-sonores par les paires de récepteurs de plusieurs côtés du véhicule, seuls les signaux les plus forts sont exploités.

10. Procédé selon la revendication 1, caractérisé en ce que, lors de la réception des signaux ultra-sonores par la paire de récepteurs de plusieurs côtés du véhicule, tous les signaux sont exploités et sont utilisés pour l'identification et/ou la correction de défauts.

11. Procédé selon l'une ou plusieurs des revendications 1 à 10, caractérisé en ce que les valeurs d'éloignement ou de direction obtenues sont utilisées, éventuellement en combinaison avec d'autres données, pour la production de signaux d'information, d'avertissement ou de commande.

Fig. 2

Fig. 1